## Europäisches Patentamt
## European Patent Office
## Office européen des brevets

(19)

(11) Veröffentlichungsnummer: **0 194 356**
**B1**

(12)

# EUROPÄISCHE PATENTSCHRIFT

(45) Veröffentlichungstag der Patentschrift:
06.04.88

(51) Int. Cl.⁴: **B 65 H 18/02,** F 16 D 1/10

(21) Anmeldenummer: **85116488.9**

(22) Anmeldetag: **23.12.85**

(54) **Klapplager.**

(30) Priorität: **14.03.85 DE 3509108**

(43) Veröffentlichungstag der Anmeldung:
**17.09.86 Patentblatt 86/38**

(45) Bekanntmachung des Hinweises auf die Patenterteilung:
**06.04.88 Patentblatt 88/14**

(84) Benannte Vertragsstaaten:
**AT BE CH DE FR GB IT LI NL SE**

(56) Entgegenhaltungen:
**EP-B-0 086 165**
**DE-C-3 127 553**

(73) Patentinhaber: **Ludwig Boschert GmbH & Co. KG Maschinen- und Apparatebau, Mattenstrasse 1, D-7850 Lörrach- Hauingen (DE)**

(72) Erfinder: **Der Erfinder hat auf seine Nennung verzichtet**

(74) Vertreter: **Patentanwälte Dipl.- Ing. Hans Schmitt Dipl.- Ing. Wolfgang Maucher, Dreikönigstrasse 13, D-7800 Freiburg i.Br. (DE)**

## Beschreibung

Die Erfindung betrifft ein Klapplager mit einer eine Ausnehmung aufweisenden Wellenaufnahme für eine mit einem stirnseitigen Zapfen formschlüssig einlegbare Welle, einen Wickelstab od. dgl. zum Auf- oder Abwickeln von Werkstoffbahnen und mit einem mitdrehenden Handrad, das um eine quer zur Drechachse des Klapplagers verlaufende Schwenkachse aus dem Bereich der Wellenaufnahme verschwenkbar ist und in Schließposition einen Verschluß der Ausnehmung der Wellenaufnahme bildet und in Verschlußstellung durch wenigstens ein zwischen Handrad und Wellenaufnahme angeordnetes Element festlegbar ist.

Ein derartiges Klapplager jedoch ohne ein Element zur Festlegung der Verschlußstellung ist aus der DE-PS 9 17 592 bekannt, wobei das klappbare Handrad bei der ersten Drehung durch Anschläge und Ausnehmungen selbsttätig in Verschlußlage gebracht wird.

Aus der DE-PS 31 27 553 ist ein Klapplager der eingangs erwähnten Art bekannt, bei welchem zwischen Handrad und Wellenaufnahme eine Rastkugel zur Fixierung der Verschlußlage des Handrades vorgesehen ist.

Insbesondere bei schweren Wickeln besteht jedoch die Gefahr, daß bei gegenüber der Einlegposition um etwa 90° verdrehtem Klapplager, wenn das Gewicht des Wickels über seinen stirnseitigen Zapfen auf das Handrad übertragen wird und sich dieser Zapfen gleichzeitig aufgrund des Gewichtes der auf der Welle aufgewickelten Bahn verformt, in Öffnungsrichtung belastet wird, so daß eine Rastkugel den dann auftretenden Kräften nicht mehr standhält. Eine solche Tendenz wird noch verstärkt, wenn der Mitnahmezapfen der Welle mit einer Kante in Wirkverbindung mit dem Verschlußbereich des Handrades steht, weil dann die vorerwähnten Kräfte von der Welle über einen größeren Drehwinkel des Handrades praktisch ausschließlich auf dieses wirken. Dies entspricht auf der anderen Seite der Teilaufgabe der Rastkugel, das Handrad möglichst einfach in Offenstellung klappen zu können.

Der Erfindung liegt die Aufgabe zugrunde, ein Klapplager der eingangs erwähnten Art zu schaffen, bei welchem einerseits das Verschwenken des Handrades in Öffnungsposition einfach bleibt, ein ungewolltes Öffnen des Handrades aber auch bei schweren Wickeln mit Sicherheit und dennoch mit relativ geringem Aufwand verhindert ist.

Zur Lösung dieser Aufgabe ist das Klapplager der eingangs erwähnten Art dadurch gekennzeichnet, daß das Element zum Festlegen der Verschlußstellung des Handrades eine öffenbare Sperrklinke ist.

Eine Sperrklinke kann hohe Kräfte übertragen und somit in Schließstellung ein ungewolltes Öffnen des Handrades auch unter hohen Belastungen ausschließen. Dennoch stellt eine Sperrklinke ein relativ einfaches Konstruktionselement dar, welches ohne zusätzlichen Platzbedarf im Bereich zwischen Handrad und Wellenaufnahme untergebracht werden kann, auf der anderen Seite aber so leicht gelöst werden kann, daß auch das Öffnen des Klapplagers einfach bleibt.

Zwar ist aus der schon erwähnten DE-PS 31 27 553 eine Hilfsvorrichtung bekannt, mit der das Handrad maschinell in Öffnungs- und Schließstellung gebracht werden kann und welches somit geeignet ist, die Schließstellung zu fixieren. Dabei greift ein gabelförmiges Element am Umfang des Handrades an und soll bei dessen Schließstellung eigentlich einen Abstand von dem Handrad einhalten, damit dieses sich frei drehen kann. Würden nun die erwähnten Ausstellkräfte auf das Handrad wirken, könnte dieses nur dadurch in Schließstellung gehalten werden, daß es gleichzeitig an der erwähnten Hilfsvorrichtung schleift. Darüberhinaus hat diese Hilfsvorrichtung einen beachtlichen Platzbedarf und bedeutet einen derartigen konstruktiven Aufwand, daß eine Verwendung nur zur Sicherung der Schließstellung des Handrades nicht vertretbar wäre. Der Hauptgrund dieser vorbekannten Vorrichtung besteht deshalb auch darin, ein Handrad maschinell öffnen und schließen zu können.

Die vorliegende Erfindung vermeidet nun diesen Aufwand und wäre sogar in Kombination mit der erwähnten mechanischen Verstellvorrichtung sinnvoll, weil dadurch vermieden würde, daß das Handrad bei seiner Drehung an der Betätigungsklaue schleifen könnte, was zu unerwünschten Geräuschen, Erhitzungen und Verschleiß führen würde.

Besonders zweckmäßig ist es, wenn die Sperrklinke schwenkbar an dem Handradkörper gelagert ist und mit ihrem Sperrende in Schließstellung des Handrades und in ihrer Sperrstellung aus dem Inneren gegenüber der Wellenaufnahme verschwenkbaren Bereich des Handrades in eine Sperrausnehmung der Wellenaufnahme vorsteht. Die Anordnung der Sperrklinke am Handrad selbst erleichtert dabei deren Bedienbarkeit.

Die Sperrklinke kann - vorzugsweise abseitig ihrer Schwenklagerung - einen Betätigungsvorsprung oder -arm aufweisen, der als Handgriff od. dgl. zum Verschwenken der Sperrklinike in Öffnungslage ausgebildet ist. Somit kann zum Öffnen des Handrades auf ganz einfache Weise zunächst die Sperrklinike entriegelt werden, wonach Handrad in üblicher Weise zu bedienen ist.

Dabei kann die Sperrklinke gegen die Kraft einer Feder in ihre Öffnungslage verschwenkbar sein und durch Federkraft selbsttätig in Schließlage gehalten sein. Insbesondere kann an dem Betätigungsarm der Sperrklinke eine Zugfeder entgegen der Öffnungsrichtung dieses Betätigungsarmes angreifen.

Zwar kann durch geschickte Anordnung eine Sperrklinke auch ohne zusätzliche Federbelastung in ihrer Schließstellung gehalten werden, jedoch wird durch die vorerwähnten Maßnahmen die Sicherheit erhöht.

Besonders zweckmäßig für den Betrieb des Klapplagers und die Bedienbarkeit des Handrades und der Sperrklinke ist es, wenn der zum Verschwenken der Sperrklinke dienende Betätigungsarm bei Sperrstellung der Sperrklinke etwa in der Ebene des Handrades in dessen Umriß liegt, während die Sperrklinke schräg dazu steht und etwa in die Richtung weist, in welche das Handrad zum Öffnen des Klapplagers verschwenkbar ist. Dadurch wird nämlich erreicht, daß während des Rotierens des Handrades der Betätigungsarm in der Orientierung liegt, in welcher die Fliehkräfte an ihm angreifen, was eine zusätzliche Kraftkomponente auf die Sperrklinke in deren Sperrstellung bewirkt. Selbst bei nachlassender Federkraft wird somit die Betriebssicherheit aufrechterhalten.

Dabei kann die Sperrklinke und ihr Betätigungsarm einen stumpfen Winkel einschließen, so daß die Sperrklinke in jedem Falle von dem Handrad in eine Ausnehmung der Wellenaufnahme ragt, wenn der Betätigungsarm sich in der Handradebene befindet.

Für eine gute Bedienbarkeit und bestmögliche Kraftübertragung ist es vorteilhaft, wenn die Sperrklinke im Bereich des größten Schwenkweges des Handrades gegenüber dessen Schwenkachse seitlich der Ausnehmung der Wellenaufnahme angeordnet ist und die Wellenaufnahme seitlich der Ausnehmung die Sperrausnehmung hat. Dieser Bereich des Handrades muß auch für dessen Klappbewegungen genügend gut zugänglich sein, so daß die Anordnung der Sperrklinke in diesem Bereich deren Bedienbarkeit verbessert, während außerdem gerade die hier stattfindende Verschwenkung unter relativ günstigen Hebelverhältnissen auch gesperrt werden kann. Weitere Ausgestaltungen der Erfindung und insbesondere der Sperrklinke und der Sperrausnehmung sind Gegenstand der Ansprüche 9 bis 16.

Insbesondere bei Kombination einzelner oder mehrerer der vorbeschriebenen Merkmale und Maßnahmen ergibt sich ein Klapplager, bei welchem selbst bei dem Einsatz sehr schwerer Wickel und daraus resultierenden Kraftkomponenten auf das Handrad in dessen Öffnungsrichtung dieses sicher in Schließstellung gehalten wird, ohne daß dabei eine platzaufwendige Vorrichtung mit einer den Handradrand umgreifenden Klaue erforderlich ist, an welcher das Handrad bei geringfügiger Auslenkung bereits reiben könnte. Gleichzeitig ist dennoch die Bedienung einfach und der konstruktive Aufwand nicht oder kaum vergrößert, weil auch für die bisher übliche Halterung des Handrades in Schließstellung mittels einer Rastkugel entsprechende Vorkehrungen an dem Handrad und der Wellenaufnahme getroffen werden mußten.

Nachstehend ist die Erfindung mit ihren ihr als wesentlich zugehörenden Einzelheiten anhand der Zeichnung noch näher beschrieben. Es zeigt in zum Teil schematisierter Darstellung:

Fig. 1 eine im Schnitt dargestellte Seitenansicht des Klapplagers bei in seiner Schließstellung verriegeltem Handrad und

Fig. 2 eine Stirnansicht des Klapplagers vom - nicht eingelegten - Wickelstab her gesehen.

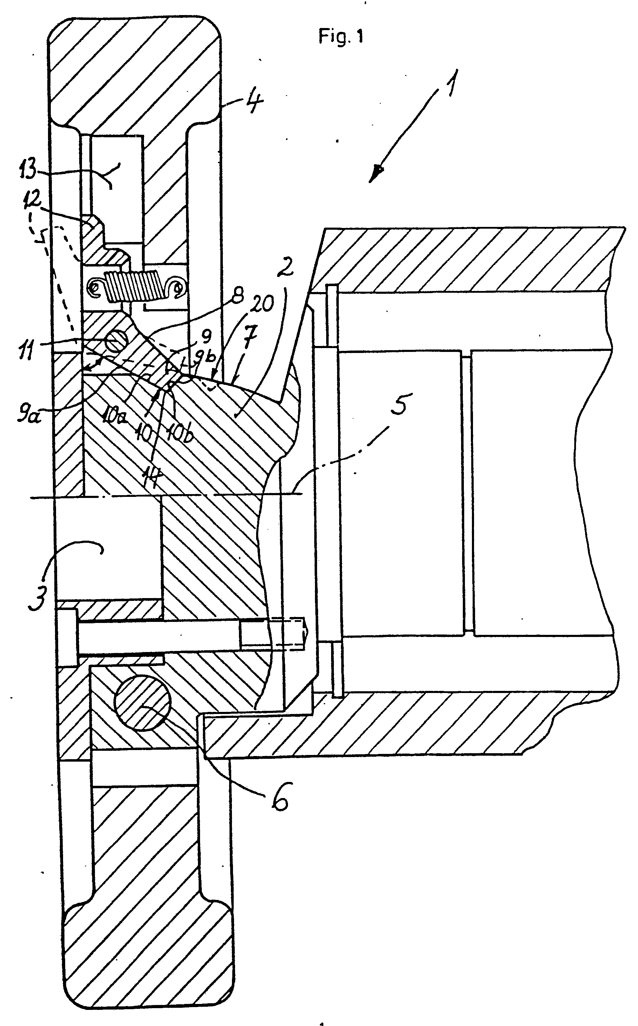

Ein im ganzen mit 1 bezeichnetes Klapplager weist eine Wellenaufnahme 2 mit einer Ausnehmung 3 zum formschlüssigen Einlegen eines stirnseiten entsprechend geformten Zapfens einer Welle oder eines Wickelstabes zum Auf- oder Abwickeln von Werkstoffbahnen und ein mitdrehendes Handrad 4 auf. Das Handrad 4 ist um eine quer zur Drehachse 5 des Klapplagers 1 verlaufende Schwenkachse 6 aus dem Bereich der Wellenaufnahme von der Welle bzw. dem Wickelstab weg in den Bereich 7 der Wellenaufnahme 2 verschwenkbar. In der in Fig. 1 dargestellten Schließposition bildet das Handrad 4 einen Verschluß der Ausnehmung 3 der Wellenaufnahme 2 und ist in noch zu beschreibender Weise in dieser Verschlußstellung auch gegen ungewolltes Öffnen festlegbar.

Im Ausführungsbeispiel ist vorgesehen, daß zum Festlegen der Verschlußstellung des Handrades 4 eine zwischen Handrad 4 und Wellenaufnahme 2 angeordnete öffenbare Sperrklinke 8 vorgesehen ist. Dabei ist die Sperrklinke 8 schwenkbar am Handradkörper gelagert und steht mit ihrem Sperrende 9 in der in Fig. 1 dargestellten Schließstellung des Handrades 4 und in ihrer Sperrstellung aus dem Inneren gegenüber der Wellenaufnahme 2 verschwenkbaren Bereich des Handrades 4 in eine Sperrausnehmung 10 der Wellenaufnahme 2 vor.

Die Sperrklinke 8 hat abseitig ihrer Schwenklagerung 11 einen Betätigungsvorsprung oder -arm 12, der als Handgriff zum Verschwenken der Sperrklinke 8 aus der mit durchgezogenen Strichen in Fig. 1 dargestellten Sperrstellung in die strichpunktiert dargestellte Öffnungslage ausgebildet ist. Man erkennt, daß der Betätigungsarm 12 in Fig. 1 nach links bewegt werden kann, wodurch sich die Sperrklinke 8 selbst aus ihrer Sperrausnehmung 10 herausheben läßt, wobei die Sperrklinke 8 um ihre Schwenklagerung 11 verschwenkt wird.

Dabei ist die Sperrklinke 8 gegen die Kraft einer Feder 13 in ihre Öffnungslage verschwenkbar und wird durch die Federkraft in ihrer Schließlage festgehalten. Im Ausführungsbeispiel greift dazu die Feder 13, die als Zugfeder ausgebildet ist, an dem Betätigungsarm 12 der Sperrklinke 8 entgegen der Öffnungsrichtung dieses Betätigungsarmes 12 an. Man erkennt in Fig. 1 deutlich, daß beim Verschwenken des Betätigungsarmes 12 in Öffnungslage die Zugfeder 13 gedehnt wird.

In vorteilhafter Weise liegt der Betätigungsarm 12 bei Sperrstellung der Sperrklinke 8 etwa in der Ebene des Handrades, ragt also im Gegensatz zu seiner Öffnungsposition nicht über den Umriß. Dies ist für die Vermeidung von Unfällen vorteilhaft, weil das Handrad wie bisher trotz des Vorhandenseins einer Sperrklinke praktisch vorsprungfrei bleibt. Darüberhinaus wird jedoch bei der Rotation des Handrades 4 auf diesen Betätigungsarm 12 eine Fliehkraft ausgeübt, die einem ungewollten Verschwenken in die Öffnungslage entgegenwirkt. Somit wird auch die Sicherheit der gesamten Konstruktion vergrößert. Die Sperrklinke 8 steht schräg zu dem Betätigungsarm 12, wobei sie mit diesem einen stumpfen Winkel einschließt, und weist etwa in die Richtung, in welche das Handrad 4 zum Öffnen des Klapplagers 1 verschwenkbar ist. Dabei erkennt man deutlich, daß die Sperrausnehmung 10 für die Sperrklinke 8 vor dem Bereich 7 angeordnet ist, in den das Handrad 4 zum Öffnen des Klapplagers 1 verschwenkt werden kann.

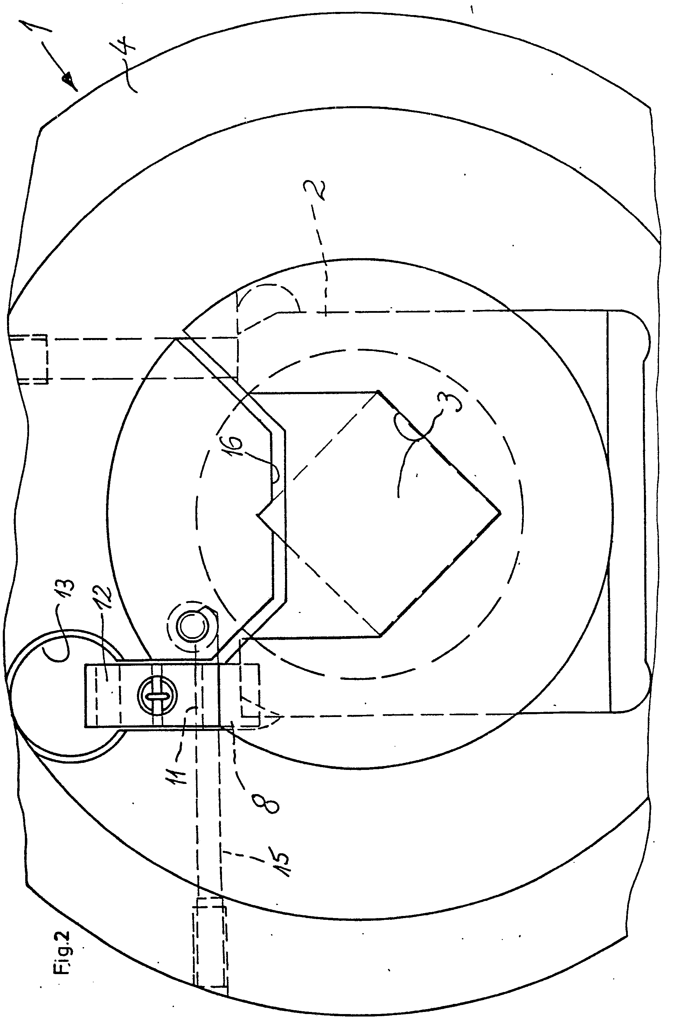

In Fig. 1 erkennt man, daß die Sperrklinke 8 im Bereich des größten Schwenkweges des Handrades 4 gegenüber dessen Schwenkachse 6 angeordnet ist, während man in Fig. 2 erkennt, daß sich die Sperrklinke 8 dabei seitlich der Ausnehmung 3 der Wellenaufnahme 2 befindet. Somit hat die Wellenaufnahme 2 seitlich ihrer Ausnehmung 3 die Sperrausnehmung 10. Gegebenenfalls könnte etwa spiegelsymetrisch zur Anordnung der Sperrklinke 8 eine weitere Sperrklinke oder aber auch eine Rastvorrichtung od. dgl. noch Platz finden.

Das Handrad 4 hat im Bereich des freien Endes des Betätigungsarmes 12 der Sperrklinke 8 eine Grifföffnung 17, die das Erfassen und Ergreifen des freien Endes des Betätigungsarmes 12 erleichtert. Gleichzeitig läßt sich durch diese Grifföffnung die eventuell durch das Vorhandensein der Sperrklinke entstehende Unwucht des Handrades 4 ausgleichen, indem man diese Grifföffnung 17 in ihrer Größe entsprechend ausbildet.

Im Ausführungsbeispiel ist die Sperrausnehmung 10 in ihrem Querschnitt winkelförmig und die Sperrklinke 8 paßt mit ihrem Sperrende 9 genau in diese Ausnehmung 10, wie man es in der Schnittdarstellung der Fig. 1 erkennt. Die eine Wand 10 a der Ausnehmung 10 berührt dabei die Unterseite 9 a und die andere Wand 10 b die Stirnseite 9 b der Sperrklinke 8, wenn die Schließlage eingenommen wird. Es entspricht also die Außenkontur der Sperrklinke 8 zumindest in diesem Bereich der der Sperrausnehmung 10. Dabei bilden die Unterseite 9 a und die Wand 10 a einen Anschlag, der die genaue Sperrlage der Sperrklinke 8 festlegt, während die Stirnseite 9 b der Wand 10 b die eigentliche Kraftübertragung durchführt.

Der Winkel zwischen den beiden Begrenzungswänden 10 a und 10 b der Sperrausnehmung 10 und ebenso der Winkel zwischen der Unterseite 9 a und der Stirnseite 9 b der Sperrklinke 8 ist dabei größer als 90°, damit es beim Ausheben der Sperrklinke 8 und ihres Sperrbereiches 9 aus der Sperrausnehmung 10 keine Verkantungen insbesondere zwischen der Stirnseite 9 b und der Begrenzungswand 10 b gibt. Der Winkel zwischen der Unterseite 9 a und der Stirnseite 9 b des Sperrarmes 8 und ebenso der entsprechende Winkel an der Sperrausnehmung 10 ist dabei so gewählt, daß die diesem inneren Winkel entsprechende Außenecke 14 der Sperrklinke 8 sich beim Ausschwenken aus der Sperrausnehmung 10 von dem inneren Winkel ausgehend von der entsprechenden Gegenfläche, also der Wand 10 b entfernt. Entsprechend einfach ist auch das Einschwenken in die Sperrstellung. Der Winkel zwischen der Unterseite 9 a und der Stirnseite 9 b der Sperrklinke 8 kann z. B. etwa 100° betragen.

Im Ausführungsbeispiel ist die Schwenklagerung 11 der Sperrklinke 8 als ein Stift ausgebildet, der parallel zu der Schwenkachse 6 des Handrades 4 in einer entsprechenden Bohrung 15 des Handrades 4 angeordnet ist.

Es sei noch erwähnt, daß die Sperrklinke 8 im Ausführungsbeispiel mit ihrer Unterseite 9 a gegenüber der Ebene des Handrades 4 einen Winkel ($\alpha$) von etwa 60° nach der Schwenkseite hin einschließt. Dadurch wird ermöglicht, daß die Schwenklagerung 11 relativ dicht oberhalb der Wellenaufnahme 2 angeordnet ist und die Sperrklinke 8 genügend tief in eine entsprechende Sperrausnehmung 10 eingreifen kann, dennoch aber auch eine bequeme Anordnung des Betätigungsarmes 12 möglich ist.

In Fig. 2 ist noch angedeutet, daß die Wellenaufnahme 2 eine in ihrem unteren Bereich winklig, im Ausfürungsbeispiel rechtwinklig zulaufende Ausnehmung 3 hat, so daß eine Diagonale des vorzugsweise im Querschnitt quadratischen Zapfens der Welle in Gebrauchsstellung senkrecht zur Schwenkachse 6 des Handrades 4 steht. Demgemäß tritt eine Ecke dieses quadratischen Querschnittes des Zapfens der Welle mit dem Verschlußbereich 16 des Handrades in Wirkverbindung, wenn dieser gegenüber der in Fig. 2 dargestellten Lage um etwa 180° verdreht ist. Somit muß dann das Handrad erhebliche Kräfte aufnehmen insbesondere dann, wenn das Klapplager 9 sehr schwere Wickel trägt. Die Sperrklinke 8 verhindert dann, daß durch geringfügige Biegungen der Welle auf das Handrad in dessen Verschwenkrichtung ausgeübte Kräfte zu einem ungewollten Öffnen des Klapplagers 1 führen können. In Fig. 1 ist mit gestrichelten Linien noch angedeutet, daß in Öffnungsrichtung des Handrades - also in Richtung seiner Verschwenkung um die Schwenkachse 6 - hinter der Sperrausnehmung 10 für die Sperrklinke 8 wenigstens eine zweite Sperrausnehmung 20 vorgesehen sein kann, in die die Sperrklinke 8 bei etwas gegenüber der in Fig. 1 dargestellten Schließstellung verschwenktem Handrad 4 paßt. Dadurch ist eine erste Verriegelung des Handrades auch dann möglich, wenn durch irgendwelche Verunreinigungen, irgendeinen Verschleiß od.dgl. Störungen die eigentliche Schließstellung des Handrades nicht mit Sicherheit erreicht wird und deshalb die Sperrklinke in die eigentliche Sperrausnehmung 10 nicht einrasten kann. Es wird dann dennoch wenigstens eine erste Sperrstellung des Handrades mit Sicherheit erreicht, in welcher die Wellenaufnahme 2 bereits geschlossen ist. Somit kann durch diese Maßnahme die Betriebssicherheit vor allem für den Fall erheblich erhöht werden, daß ein selbsttätiges Schließen des Handrades 4 durch seine Drehung vorgesehen ist und aus irgendeinem Grunde nicht bis in die dafür eigentlich vorgesehene Endstellung schwenkbar wäre. Es ergibt sich also eine zusätzliche Sicherheit durch eine zweite Verriegelungsstufe, die einen Verschluß der Wellenaufnahme 2 durch das Handrad 4 auch dann gewährleistet, wenn dieses nicht vollständig geschlossen wäre. Die Form der Sperrausnehmung 20 entspricht dabei weitgehend oder identisch der der Sperrausnehmung 10.

**Patentansprüche**

1. Klapplager (1) mit einer eine Ausnehmung (3) aufweisenden Wellenaufnahme (2) für eine mit einem stirnseitigen Zapfen formschlüssig einlegbare Welle, einen Wickelstab od. dgl. zum Auf- oder Abwickeln von Werkstoffbahnen und mit einem mitdrehenden Handrad (4), das um eine quer zur Drehachse (5) des Klapplagers (1) verlaufende Schwenkachse (6) aus dem Bereich der Wellenaufnahme (2) verschwenkbar ist und in Schließposition einen Verschluß der Ausnehmung (3) der Wellenaufnahme (2) bildet und in Verschlußstellung durch wenigstens ein zwischen Handrad (4) und Wellenaufnahme (2) angeordnetes Element festlegbar ist, dadurch gekennzeichnet, daß das Element zum Festlegen der Verschlußstellung des Handrades (4) eine öffenbare Sperrklinke (8) ist.

2. Klapplager nach Anspruch 1, dadurch gekennzeichnet, daß die Sperrklinke (8) schwenkbar an dem Handradkörper gelagert ist und mit ihrem Sperrende (9) in Schließstellung des Handrades (4) und in ihrer Sperrstellung aus dem inneren, gegenüber der Wellenaufnahme (2) verschwenkbaren Bereich des Handrades (4) in eine Sperrausnehmung (10) der Wellenaufnahme (2) vorsteht.

3. Klapplager nach Anspruch 1 oder 2, dadurch gekennzeichnet, das die Sperrklinke (8) vorzugsweise abseitig ihrer Schwenklagerung (11) einen Betätigungsvorsprung oder -arm aufweist, der als Handgriff od. dgl. zum Verschwenken der Sperrklinke (8) in Öffnungslage ausgebildet ist.

4. Klapplager nach einem der Ansprüche 1 bis 3, dadurch gekennzeichnet, daß die Sperrklinke (8) gegen die Kraft einer Feder (13) in ihre Öffnungslage verschwenkbar und durch

Federkraft selbsttätig in Schließstellung gehalten ist.

5. Klapplager nach Anspruch 4, dadurch gekennzeichnet, das an dem Bettätigungsarm (12) der Sperrklinke (8) eine Zugfeder entgegen der Öffnungsrichtung dieses Betätigungsarmes (12) angreift.

6. Klapplager nach einem der Ansprüche 1 bis 5, dadurch gekennzeichnet, daß der zum Verschwenken der Sperrklinke (8) dienende Betätigungsarm (12) bei Sperrstellung der Sperrklinke (8) etwa in der Ebene des Handrades in dessen Umriß liegt, während die Sperrklinke (8) schräg dazu steht und etwa in die Richtung weist, in welche das Handrad (4) zum Öffnen des Klapplagers (1) verschwenkbar ist.

7. Klapplager nach einem der Ansprüche 1 bis 6, dadurch gekennzeichnet, daß die Sperrklinke (8) und ihr Betätigungsarm (12) einen stumpfen Winkel einschließen.

8. Klapplager nach einem der Ansprüche 1 bis 7, dadurch gekennzeichnet, daß die Sperrklinke (8) im Bereich des größten Schwenkweges des Handrades gegenüber dessen Schwenkachse seitlich der Ausnehmung (3) der Wellenaufnahme (2) angeordnet ist und die Wellenaufnahme (2) seitlich der Ausnehmung (3) die Sperrausnehmung (10) hat.

9. Klapplager nach einem der Ansprüche 1 bis 8, dadurch gekennzeichnet, daß das Handrad (4) im Bereich des freien Endes des Betätigungsarmes (12) der Sperrklinke (8) eine Griföffnung (17) zum Ergreifen des freien Endes des Betätigungsarmes (12) der Sperrklinke hat.

10. Klapplager nach einem der Ansprüche 1 bis 9, dadurch gekennzeichnet, daß die Sperrklinke in eine winkelförmige Sperrausnehmung der Wellenaufnahme paßt, deren eine Wand (10a) die Unterseite (9a) und deren andere Wand (10b) die Stirnseite (9b) der Sperrklinke (8) in Schließstellung berührt, wobei die Außenkontur der Sperrklinke vorzugsweise der der Sperrausnehmung (10) entspricht.

11. Klapplager nach einem der Ansprüche 1 bis 10, dadurch gekennzeichnet, daß der Winkel zwischen den beiden Begrenzungswänden (10a, 10b) der Sperrausnehmung (10) und ebenso der Winkel zwischen der Unterseite (9a) und der Stirnseite (9b) der Sperrklinke (8) größer als 90° ist.

12. Klapplager nach einem der Ansprüche 1 bis 11, dadurch gekennzeichnet, daß der Winkel zwischen der Unterseite (9a) und der Stirnseite (9b) des Sperrarmes (8) so gewählt ist, daß die dem inneren Winkel entsprechende Außenecke der Sperrklinke (8) sich beim Ausschwenken aus der Sperrausnehmung (10) von dem inneren Winkel ausgehend von der entsprechenden Gegenfläche (10b) entfernt.

13. Klapplager nach einem der Ansprüche 1 bis 12, dadurch gekennzeichnet, daß die Sperrklinke (8) auf einem parallel zu der Schwenkachse (6) des Handrades (4) in einer Bohrung (15) angeordneten Stift (11) gelagert ist.

14. Klapplager nach einem der Ansprüche 1 bis 13, dadurch gekennzeichnet, daß die Wellenaufnahme (2) eine in ihrem unteren Bereich winklig, vorzugsweise rechtwinklig zulaufende Ausnehmung (3) hat, so daß eine Diagonale des vorzugsweise im Querschnitt quadratischen Zapfens der Welle in Gebrauchsstellung senkrecht zur Schwenkachse (6) des Handrades (4) steht.

15. Klapplager nach einem der Ansprüche 1 bis 14, dadurch gekennzeichnet, daß die Sperrklinke (8) mit ihrer Unterseite (9a) gegenüber der Ebene des Handrades (4) einen Winkel (α) von etwa 60° nach der Schwenkseite hin einschließt.

16. Klapplager nach einem der Ansprüche 1 bis 15, dadurch gekennzeichnet, daß der Winkel zwischen der Unterseite (9a) und der Stirnseite (9b) der Sperrklinke (8) etwa 100° beträgt.

17. Klapplager nach einem der Ansprüche 1 bis 16, dadurch gekennzeichnet, daß in Öffnungsrichtung des Handrades (4) hinter der Sperrausnehmung (10) für die Sperrklinke (8) wenigstens eine zweite Sperrausnehmung (20) vorgesehen ist, in die die Sperrklinke (8) bei etwas verschwenktem, jedoch schon in die Wellenaufnahme (2) verschließender Position befindlichem Handrad (4) paßt.

**Claims**

1. A hinged bearing (1) including a shaft carrier (2) having a recess (3) for a shaft adapted to be inserted in a form-locking manner with a journal at the front end, a winding rod or the like for winding off or winding up webs of material and further including an entrained handwheel (4) which is adapted to be swung out of the area of the shaft carrier (2) about a swivel axis (6) extending transversely to the axis of rotation (5) of the hinged bearing (1) and in the closed position forms a closure of the recess (3) of the shaft carrier (2) and in the locked position is adapted to be fixed by at least one element disposed between handwheel (4) and shaft carrier (2), characterized in that the element for fixing the locked position of the handwheel (4) is an openable pawl (8).

2. The hinged bearing as claimed in claim 1, characterized in that the pawl (8) is swivel-mounted on the handwheel body and in the closed position of the handwheel (4) and in the arresting position of the pawl the latter projects with its arresting end (9) from the inside handwheel (4) area swivelling relative to the shaft carrier (2) into a recess (10) of the shaft carrier (2).

3. The hinged bearing as claimed in claim 1 or claim 2, characterized in that the pawl (8) has, preferably remote from its swivel bearing (11), an operating projection or operating arm which takes the form of a handle or the like for swinging the pawl (8) into the opening position.

4. The hinged bearing as claimed in any one of claims 1 to 3, characterized in that the pawl (8) is adapted to be swung into its opening position against the force of a spring (13) and is automatically held in the closed position by spring tension.

5. The hinged bearing as claimed in claim 4, characterized in that a tension spring engages the operating arm (12) of the pawl (8) against the opening direction of said operating arm (12).

6. The hinged bearing as claimed in any one of claims 1 to 5, characterized in that when the pawl (8) is in the arresting position the operating arm (12) serving to swing the pawl (8) lies approximately in the plane of the handwheel in the outline of the latter, while the pawl (8) is set at a slant thereto and points approximately in the direction in which the handwheel (4) is swingable for opening the hinged bearing (1).

7. The hinged bearing as claimed in any one of claims 1 to 6, characterized in that the pawl (8) and the operating arm (12) thereof form an obtuse angle.

8. The hinged bearing as claimed in any one of claims 1 to 7, characterized in that the pawl (8) is disposed in the area of the largest swivel path of the handwheel opposite the swivel axis of the latter at the side of the recess (3) of the shaft carrier (2) and the shaft carrier (2) has the arresting recess (10) at the side of the recess (3).

9. The hinged bearing as claimed in any one of claims 1 to 8, characterized in that in the region of the free end of the operating arm (12) of the pawl (8) the handwheel (4) has a grip opening (17) for grasping the free end of the operating arm (12) of the pawl.

10. The hinged bearing as claimed in any one of claims 1 to 9, characterized in that the pawl fits into an angular arresting recess of the shaft carrier, the one wall (10a) of said recess contacting the underside (9a) and the other wall (10b) of said recess contacting the front face (9b) of the pawl (8) in the closed position, the outer contour of the pawl preferably corresponding to that of the arresting recess (10).

11. The hinged bearing as claimed in any one of claims 1 to 10, characterized in that the angle between the two defining walls (10a, 10b) of the recess (10) and likewise the angle between the underside (9a) and the front face (9b) of the pawl (8) is larger than 90°.

12. The hinged bearing as claimed in any one of claims 1 to 11, characterized in that the angle between the underside (9a) and the front face (9b) of the arresting arm (8) is selected in such a way that when swinging out of the recess (10) the outer corner which belongs to the pawl (8) and corresponds to the inside angle moves away from the corresponding counter surface (10b), starting from the inside angle.

13. The hinged bearing as claimed in any one of claims 1 to 12, characterized in that the pawl (8) is mounted on a pin (11) disposed parallel to the swivel axis (6) of the handwheel (4) in a bore (15).

14. The hinged bearing as claimed in any one of claims 1 to 13, characterized in that the shaft carrier (2) has a recess (3), the lower area of said recess being angled, preferably at right angles, so that in the position for use a diagonal of the shaft journal preferably quadratic in cross section is perpendicular to the swivel axis (6) of the handwheel (4).

15. The hinged bearing as claimed in any one of claims 1 to 14, characterized in that the pawl (8) with its underside (9a) forms an angle (α) relative to the plane of the handwheel (4) of approximately 60° towards the side of swing.

16. The hinged bearing as claimed in any one of claims 1 to 15, characterized in that the angle between the underside (9a) and the front face (9b) of the pawl (8) is about 100°.

17. The hinged bearing as claimed in any one of claims 1 to 16, characterized in that in the opening direction of the handwheel (4) there is provided behind the arresting recess (10) for the pawl (8) at least one second arresting recess (20) into which the pawl (8) fits when the handwheel (4) is swung a little but is already located in the position closing the shaft carrier (2).

**Revendications**

1. Palier à bascule (1) comprenant un logement (2) présentant un évidement (3), pour un arbre insérable par concordance de formes grâce à un tourillon situé à sa face extrême, pour une barre enrouleuse ou un élément analogue destiné à enrouler ou dérouler des nappes de matériau, ainsi qu'un volant (4) qui tourne conjointement, qui peut effectuer un pivotement à l'écart de la région du logement (2) de l'arbre, autour d'un axe de pivotement (6) s'étendant perpendiculairement à l'axe de rotation (5) du palier à bascule (1), qui forme en position fermée une obturation de l'évidement (3) du logement (2) de l'arbre, et qui peut être arrêté, en position d'obturation, par l'intermédiaire d'au moins un élément intercalé entre ce volant (4) et le logement (2) de l'arbre, caractérisé par le fait que l'élément destiné à arrêter la position d'obturation du volant (4) est un cliquet de verrouillage (8) libérable.

2. Palier à bascule selon la revendication 1, caractérisé par le fait que le cliquet de verrouillage (8) est monté pivotant sur le corps du volant et fait saillie par son extrémité de verrouillage (9), dans la position fermée du volant (4) et dans sa position de verrouillage, en dehors de la région interne du volant (4) pouvant pivoter par rapport au logement (2) de l'arbre, dans un évidement de verrouillage (10) du logement (2) de l'arbre.

3. Palier à bascule selon la revendication 1 ou 2, caractérisé par le fait que le cliquet de verrouillage (8) présente, de préférence à l'écart de son montage pivotant (11), une saillie ou un bras d'actionnement réalisé en tant que poignée, ou élément analogue, pour faire pivoter le cliquet de verrouillage (8) à sa position ouverte.

4. Palier à bascule selon l'une des revendications 1 à 3, caractérisé par le fait que le cliquet de verrouillage (8) peut pivoter à sa position ouverte en s'opposant à la force d'un ressort (13), et est maintenu automatiquement en position fermée par la force d'un ressort.

5. Palier à bascule selon la revendication 4, caractérisé par le fait qu'un ressort de traction, en prise avec le bras d'actionnement (12) du cliquet de verrouillage (8), agit à l'opposé de la direction d'ouverture de ce bras d'actionnement (12).

6. Palier à bascule selon l'une des revendications 1 à 5, caractérisé par le fait que, dans la position de verrouillage du cliquet de verrouillage (8), le bras d'actionnement (12) servant à faire pivoter ce cliquet de verrouillage (8) se trouve sensiblement dans le plan du volant, dans les limites du pourtour de ce dernier, tandis que le cliquet de verrouillage (8) est incliné par rapport à ce bras et est sensiblement tourné dans la direction dans laquelle un pivotement peut être imprimé au volant (4) pour ouvrir le palier à bascule (1).

7. Palier à bascule selon l'une des revendications 1 à 6, caractérisé par le fait que le cliquet de verrouillage (8) et son bras d'actionnement (12) forment un angle obtus.

8. Palier à bascule selon l'une des revendications 1 à 7, caractérisé par le fait que, dans la région du trajet maximal de pivotement du volant par rapport à l'axe de pivotement de ce dernier, le cliquet de verrouillage (8) se trouve sur le côté de l'évidement (3) du logement (2) de l'arbre, et ce logement (2) de l'arbre présente l'évidement de verrouillage (10) sur le côté dudit évidement (3).

9. Palier à bascule selon l'une des revendications 1 à 8, caractérisé par le fait que le volant (4) présente, au voisinage de l'extrémité libre du bras d'actionnement (12) du cliquet de verrouillage (8), un orifice d'intervention (17) permettant de saisir l'extrémité libre du bras d'actionnement (12) du cliquet de verrouillage.

10. Palier à bascule selon l'une des revendications 1 à 9, caractérisé par le fait que le cliquet de verrouillage s'adapte dans un évidement angulaire de verrouillage du logement de l'arbre, dont l'une (10a) et l'autre (10b) des parois touchent en position fermée la face inférieure (9a) et la face extrême (9b) du cliquet de verrouillage (9), la configuration externe du cliquet de verrouillage correspondant de préférence à celle de l'évidement de verrouillage (10).

11. Palier à bascule selon l'une des revendications 1 à 10, caractérisé par le fait que l'angle situé entre les deux parois de délimitation (10a, 10b) de l'évidement de verrouillage (10), de même que l'angle situé entre la face inférieure (9a) et la face extrême (9b) du cliquet de verrouillage (8), sont supérieurs à 90°.

12. Palier à bascule selon l'une des revendications 1 à 11, caractérisé par le fait que l'angle situé entre la face inférieure (9a) et la face extrême (9b) du bras de verrouillage (8) est choisi de telle sorte que, lors du pivotement hors de l'évidement de verrouillage (10), le coin extérieur du cliquet de verrouillage (8) correspondant à l'angle interne s'éloigne de la surface complémentaire correspondante (10b), à partir dudit angle interne.

13. Palier à bascule selon l'une des revendications 1 à 12, caractérisé par le fait que le cliquet de verrouillage (8) est calé sur une broche (11) logée dans un perçage (15), parallèlement à l'axe de pivotement (6) du volant (4).

14. Palier à bascule selon l'une des revendications 1 à 13, caractérisé par le fait que le logement (2) de l'arbre présente un évidement (3) qui s'achève dans sa région inférieure en formant un angle, de préférence un angle droit, de sorte que, dans la position d'utilisation, une diagonale du tourillon de l'arbre, de section de préférence carrée, est perpendiculaire à l'axe de pivotement (6) du volant.

15. Palier à bascule selon l'une des revendications 1 à 14, caractérisé par le fait que le cliquet de verrouillage (8) forme par sa face inférieure (9a), par rapport au plan du volant (4), un angle ($\alpha$) d'environ 60° vers le côté pivotement.

16. Palier à bascule selon l'une des revendications 1 à 15, caractérisé par le fait que l'angle entre la face inférieure (9a) et la face extrême (9b) du cliquet de verrouillage (8) mesure environ 100°.

17. Palier à bascule selon l'une des revendications 1 à 16, caractérisé par le fait qu'il est prévu pour le cliquet de verrouillage (8), derrière l'évidement de verrouillage (10) dans la direction d'ouverture du volant (4), au moins un second évidement de verrouillage (20) dans lequel le cliquet de verrouillage (8) s'adapte lorsque le volant (4) a accompli un léger pivotement, mais occupe déjà la position obturant le logement (2) de l'arbre.

Fig. 1

Fig.2